# EUROPÄISCHE PATENTSCHRIFT

(11) **EP 3 353 408 B1**
(45) Veröffentlichungstag und Bekanntmachung des Hinweises auf die Patenterteilung: **11.03.2020**
(21) Anmeldenummer: 16770463.4
(22) Anmeldetag: 15.09.2016
(51) Int. Cl.: F02M 51/06, F02M 59/46, F02M 59/36, F02M 63/00, F16K 31/06, H01F 7/16, F04B 7/00

(54) **ELEKTRISCHER AKTOR EINER VENTILEINRICHTUNG**
ELECTRIC ACTUATOR OF A VALVE DEVICE
ACTIONNEUR ÉLECTRIQUE DE MÉCANISME DE SOUPAPE

(30) Priorität: 25.09.2015 DE 102015116240
(43) Veröffentlichungstag der Anmeldung: 01.08.2018
(73) Patentinhaber: Kendrion (Villingen) GmbH, 78048 Villingen-Schwenningen (DE)
(72) Erfinder: MAIWALD, Wolfram, 78052 Obereschach (DE); SUZUKI, Tsuneo, 78087 Mönchweiler (DE); HEINGL, Ralf, 78054 Villingen-Schwenningen (DE); SCHULZ, Florian, 78086 Brigachtal (DE)
(74) Vertreter: Westphal, Mussgnug & Partner Patentanwälte mbB
(86) Internationale Anmeldenummer: PCT/EP2016/071793
(87) Internationale Veröffentlichungsnummer: WO 2017/050626

(56) Entgegenhaltungen:
- DE-A1- 3 332 822
- DE-A1-102011 076 784
- DE-A1-102014 201 385
- JP-A- H0 828 402
- JP-B2- 3 598 610
- JP-U- S61 142 978

## Beschreibung

Die Erfindung betrifft einen elektromagnetischen Aktor einer Ventileinrichtung, insbesondere in einem Common-Rail-System eines Kraftfahrzeuges, gemäß dem Oberbegriff des Patentanspruchs 1.

Solche elektromagnetischen Aktoren sind z. B. aus der DE 10 2012 107 764 A1 bekannt. Dort ist ein elektromagnetisches Volumenstromregelventil offenbart, das zwischen eine Niederdruckpumpe und eine Hochdruckpumpe eines Common-Rail-Systems einer Kraftstoffeinspritzanlage angeordnet ist. Dort wird der Kraftstoff von einem Kraftstofftank über eine Förderleitung von der Niederdruckpumpe an die Hochdruckpumpe befördert. Dabei wird der von der Hochdruckpumpe zum Hochdruckspeicher, also zum Common-Rail-System, geführte Kraftstoff hinsichtlich seiner Menge durch das erwähnte und in der Förderleitung angeordnete Volumenstromregelventil gesteuert. Das Volumenstromregelventil ist als sogenanntes "Normally Open" - Ventil ausgebildet, was den entscheidenden Vorteil hat, dass im Falle eines Defekts oder Ausfall des Ventils auf jeden Fall noch Kraftstoff in das Rail, also in den Hochdruckspeicher gefördert werden kann und es im Gegensatz zu den "Normally - Closed" - Ventilen zu keiner Fehlfunktion der Brennkraftmaschine kommen kann, wenn das Ventil defekt wird oder ausfällt.

JP S61 142978 U, JP 3 598 610 B2 und JP H08 284 02 A bilden weiteren Stand der Technik.

Problematisch bei den für die diesen Anwendungsfall im Common-Rail-System bekannten Ventilen ist jedoch die Tatsache, dass diese regelmäßig als Regelventile ausgebildet sind. Solche Regelventile bedürfen einer komplizierten Gestaltung des Polkerns mit Steuerkonus und eine entsprechende Anpassung des zugehörenden Ankers. Darüber hinaus sind die bekannten Volumenstromregelventile sehr justageempfindlich und müssen deshalb hochgenau montiert werden. Ein erhöhter Montageaufwand ist die Folge.

Hier setzt die vorliegende Erfindung an.

Die vorliegend Erfindung hat das Ziel, einen elektromagnetischen Aktor einer Ventileinrichtung anzugeben, der im Vergleich zu den bisher eingesetzten Volumenstromregelventilen deutlich einfacher aufgebaut ist und einfach montiert werden kann. Dabei soll auf Schweißverbindungen zum Aneinanderhalten der einzelnen Komponenten eines solchen elektromagnetischen Aktors verzichtet werden können.

Dieses Ziel wird durch einen elektromagnetischen Aktor mit den Merkmalen des Anspruchs 1 gelöst.

Die Erfindung beruht im Wesentlichen darauf, dass der elektromagnetische Aktor nach Art eines elektromagnetischen Haftsystems ausgebildet ist mit einem plattenförmigen Anker, welcher plane und orthogonal zur Längsachse des Aktors angeordnete Stirnflächen des Polkerns vollständig übergreift.

Zweckmäßigerweise ist dabei auch noch vorgesehen, dass der plattenförmige Anker nicht nur die planen Stirnflächen des Polkerns vollständig übergreift, sondern zusätzlich auch noch Gehäuseabschnitte des Gehäuses, welche flanschförmig in das Innere des Gehäuses des elektromagnetischen Aktors hineinragen.

Der grundliegende Gedanke der Erfindung ist darin zu sehen, dass die herkömmlichen, sehr aufwändig herzustellenden Volumenstromregelventile, wie sie bisher zwischen Niederdruckpumpen und Hochdruckpumpen von Common-Rail-Systemen eingesetzt wurden, durch einfach aufgebaute elektromagnetische Schaltventile ersetzt werden. Dabei ist das elektromagnetische Schaltventil mit einem plattenförmigen Anker versehen, der feststehend an einem Achsstößel befestigt ist und die planen Stirnseiten des Polkerns vollständig übergreift.

Der erfindungsgemäße elektromagnetische Aktor kann in einfacher Weise dazu genutzt werden in einem Kraftstoffkanal eines Zylinderkopfes in einer Hochdruckpumpe eines Kraftfahrzeuges ein dort zugänglich eingebautes Ventilelement zu betätigen. Dabei ist das Ventilelement so in den Zylinderkopf eingebaut, dass es im nicht betätigten Zustand den Kanal von einem Zulauf zu einem Ablauf frei gibt oder verschließt. Dieses Ventilelement ist hierfür von einer Federeinrichtung beaufschlagt, derart, dass bei keiner Krafteinwirkung auf das Ventilelement von außen, die Federeinrichtung dafür sorgt, dass das Ventilelement den Ventilsitz von Zulauf zum Ablauf verschließt.

Mittels eines elektromagnetischen Aktors, gemäß der vorliegende Erfindung, kann dieses im Zylinderkopf befindliche Ventilelement jedoch von außen betätigt werden. Dies erfolgt dadurch, dass ein elektromagnetischer Aktor gemäß der vorliegenden Erfindung im Bereich des Ventilelements auf den Zylinderkopf der Hochdruckpumpe aufgesetzt, insbesondere aufgeschraubt wird, und eine Anlagefläche des magnetischen Aktors gegen das Ventilelement drückt, um den erwähnten Kanal freizugeben, so dass insbesondere Kraftstoff vom Zulauf zum Ablauf fließen kann.

Der elektromagnetische Aktor nach der vorliegenden Erfindung wird im Zusammenhang mit der Betätigung eines Ventilelements am Zylinderkopf einer Hochdruckpumpe in einem Common-Rail-System beispielhaft anhand von mehreren Figuren erläutert. Es zeigen:
- Figur 1: ein Prinzipbild eines Kraftstoffkreislaufes in einem Common-Rail-System eines Kraftfahrzeuges mit einer elektromagnetischen Ventileinrichtung nach der vorliegenden Erfindung, die zwischen Niederdruckpumpe und Hochdruckpumpe eingebaut ist,
- Figur 2: eine Schnittdarstellung der elektromagnetischen Ventileinrichtung von Figur 1 mit einem elektromagnetischen Aktor nach der Erfindung, wie dieser im Bereich eines Ventilelementes auf einen Zylinderkopf eines Motorblocks befestigt ist und zwar im unbestromten Zustand,
- Figur 3: den in Figur 2 dargestellten elektromagnetischen Aktor in vergrößerter Darstellung in Einzelansicht,
- Figur 4: eine ähnliche Darstellung wie in Figur 2, bei dem jedoch der elektromagnetische Aktor bestromt ist,
- Figur 5: der elektromagnetische Aktor gemäß den Figuren 2 bis 4 in perspektivischer Ansicht mit Blick von unten in das Gehäuse und dem darin angeordneten plattenförmigen Anker, und
- Figur 6: eine perspektivische Ansicht des elektromagnetischen Aktors von Figur 5 mit Blick von schräg hinten auf das Gehäuse mit einem Gehäusedeckel und dem aus dem Gehäusedeckel ragenden Polkern.

In den nachfolgenden Figuren bezeichnen, sofern nicht anders angegeben, gleiche Bezugszeichen gleiche Teile mit gleicher Bedeutung.

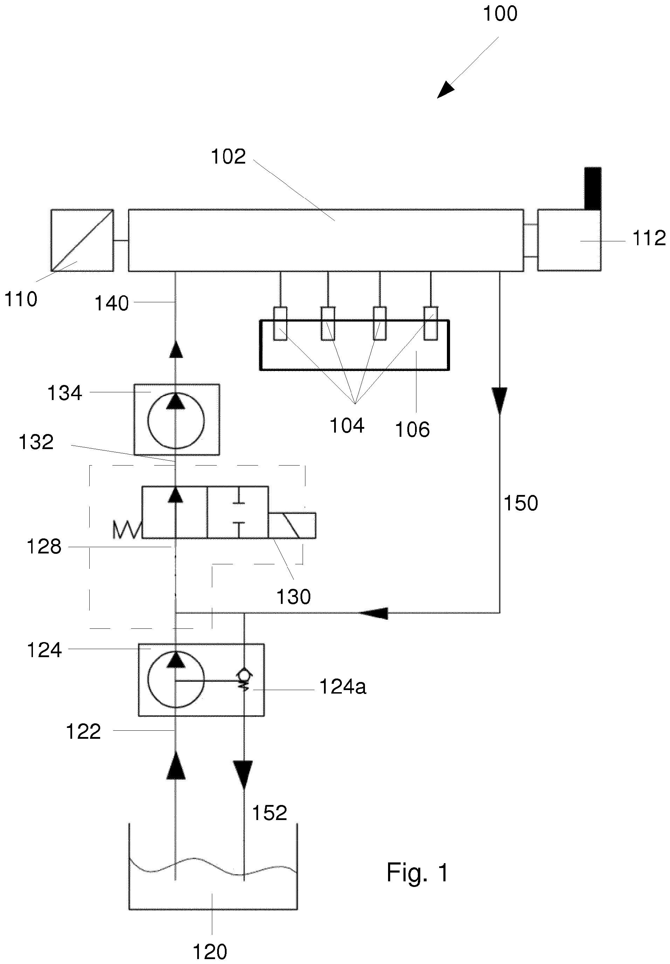

Das in Figur 1 schematisch dargestellte Kraftstoffkreislaufsystem, wie es beispielsweise bei Dieselkraftfahrzeugen Verwendung findet, verfügt über einen Hochdruckspeicher, im Folgenden Common-Rail 102 genannt. Dieses Common-Rail 102 versorgt Einspritzdüsen, sogenannte Injektoren 104, wie sie in einem Motorblock 106 eines Kraftfahrzeuges verbaut sind. In der Figur 1 sind vier solche Injektoren 104 dargestellt, wobei auch mehr oder weniger solche Injektoren 104 von dem Common-Rail 102 versorgt werden können. An das Common-Rail 102 ist ein Drucksensor 110 angeschlossen, der mit einem nicht dargestellten Steuersystem in Verbindung steht und den Druck im Common-Rail 102 misst und überwacht. Darüber hinaus ist dieses Common-Rail 102 ausgangsseitig mit einem Überdruckventil 112 in Verbindung, um im Störfall den im Common-Rail 102 anstehenden Überdruck ablassen zu können.

Das Common-Rail 102 steht an seiner Einlassseite mit einem Tank 120 für den Kraftstoff in Verbindung. Der Tank 120 ist hierfür mit einer Zuleitung 122 an eine Niederdruckpumpe 124 angeschlossen. Diese Niederdruckpumpe 124 ist über eine weitere Zuleitung 128 mit einer Ventileinrichtung 130 in Verbindung, welche ausgangsseitig über eine Leitung 132 an eine Hochdruckpumpe 134 angeschlossen ist. Diese Hochdruckpumpe 134 ist über eine Leitung 140 an den Eingang des Common-Rail 102 angeschlossen. Ausgangsseitig ist das Common-Rail 102 mit einer Ableitung 150 in Verbindung, die nicht verbrauchten Kraftstoff an die Leitung 128 zwischen Niederdruckpumpe 124 und Ventileinrichtung 130 rückführt. Über ein in der Niederdruckpumpe 124 befindliches Ventil 124a kann überflüssiger Kraftstoff von der Zuleitung 150 über eine weitere Leitung 152 zurück zum Tank 120 geführt werden.

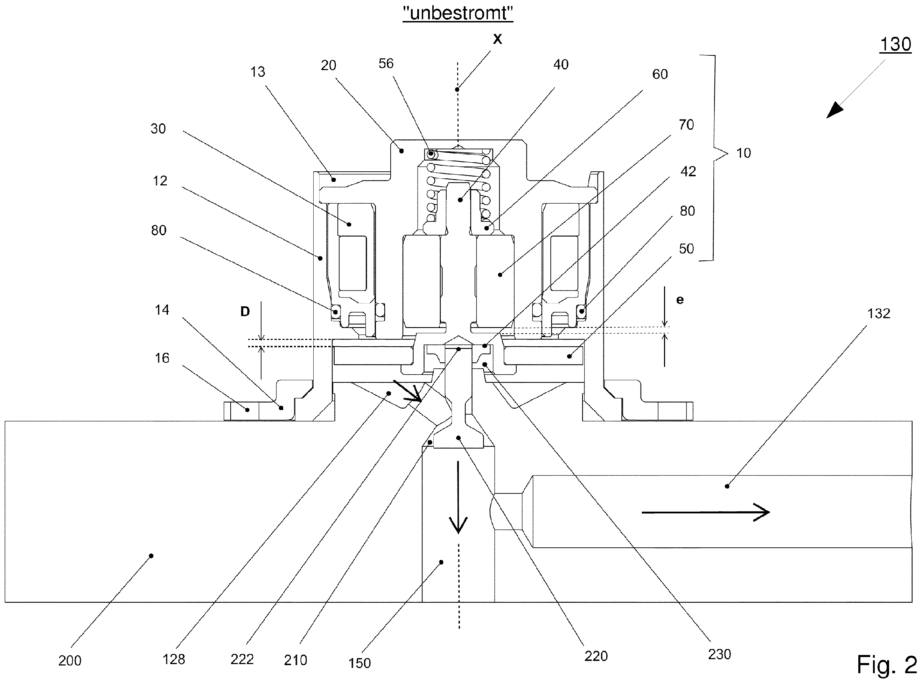

Mit der Ventileinrichtung 130 wird die Kraftstoffmenge gesteuert, die die Hochdruckpumpe 134 dem Common-Rail 102 zuführt. Die Ventileinrichtung 130 wird im Zusammenhang mit den nachfolgend dargestellten Figuren 2 bis 6 im Detail erläutert. Dabei handelt es sich um ein sogenanntes "Normally-Open"-Ventil, welches im unbestromten Zustand einer Erregerspule des elektromagnetischen Aktors offen ist und damit den Kraftstoff von der Niederdruckpumpe 124 zur Hochdruckpumpe 134 freigibt.

Die Einbausituation der Ventileinrichtung 130 von Figur 1 ist in Figur 2 dargestellt. Ausschnittsweise ist das Zylinderkopfgehäuse 200 der Hochdruckpumpe 134 gezeigt, das die im Zusammenhang mit Figur 1 erläuterten Leitungen 128, 132 sowie 150 teilweise aufweist. Dabei ist in dem Zylinderkopfgehäuse 200 ein Ventilsitz 210 vorgesehen, welcher von einem Ventilelement 220 verschließbar ist, um den Kraftstoffzulauf in der Leitung 128, die von der Niederdruckpumpe kommt, in Richtung Ablauf in der Leitung 132 zur Hochdruckpumpe zu öffnen oder zu schließen. Figur 2 zeigt den geöffneten Zustand, bei dem der Kraftstoff von der Leitung 128 zur Leitung 132 fließen kann. Das Ventilelement 220 ist dabei vom Ventilsitz 210 abgehoben, so dass dieser freigegeben ist. Der Kraftstofffluss ist in Figur 2 durch die Fließpfeile markiert.

Wie aus Figur 2 ersichtlich, befindet sich das Ventilelement 220 in einer vom Ventilsitz 210 abgehobenen Stellung, die dadurch bedingt ist, dass eine Anlagefläche 42 eines elektromagnetischen Aktors 10 gegen das Ventilelement 220 drückt und dieser niederhält. Sofern diese Anlagefläche 42 nicht gegen das Ventilelement 220 drückt, wird das Ventilelement 220 von einer Federeinrichtung 230 in der Darstellung von Figur 2 nach oben gedrückt, so dass das Ventilelement 220 den Ventilsitz 210 verschließen kann. Dies wird weiter unten noch näher erläutert. Auf das Zylinderkopfgehäuse 200 ist der elektromagnetische Aktor 10 derart passend aufgesetzt, dass die erwähnte Betätigung des Ventilelements 220 bewerkstelligt werden kann.

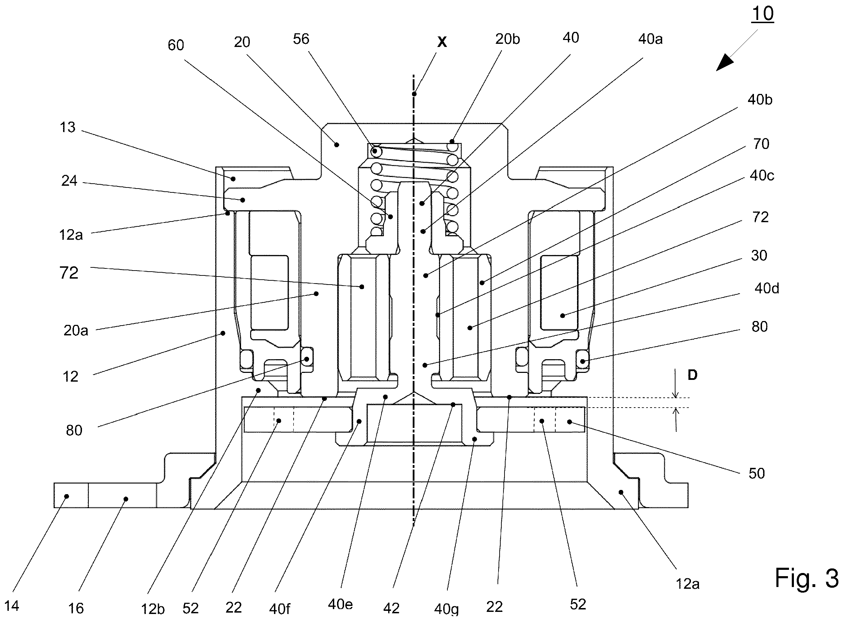

Wie insbesondere auch in der vergrößerten Darstellung des elektromagnetischen Aktors 10 in Figur 3 deutlich wird, verfügt der elektromagnetische Aktor 10 über ein rohrförmiges Gehäuse 12, welches mit einem nach außen springenden Flanschvorsprung 12a auf das Zylinderkopfgehäuse 200 aufgesetzt ist. Zur Halterung dieses Gehäuses 12 auf dem Zylinderkopfgehäuse 200 ist ein ringförmiger Flansch 16 mit Befestigungsöffnungen 16, insbesondere mit Schraublöchern, über die Gehäusewandung 12 gestülpt, um den elektrischen Aktor 10 am Zylinderkopfgehäuse 200 befestigen zu können. Auf seiner gegenüberliegenden Seite ist das Gehäuse 12 mit einem ringförmigen Gehäusedeckel 13 abgeschlossen. Das Gehäuse 12 ist rotationssymmetrisch um eine Längsachse X des elektromagnetischen Aktors 10 herum angeordnet, wobei diese Längsachse X mit der Mittenachse des zuvor erwähnten Ventilelements 220 idealerweise fluchtet.

Im Inneren des Gehäuses 12 befindet sich rotationssymmetrisch zur Längsachse X ein topfförmiger Polkern 20 aus magnetisch leitendem Material, insbesondere aus Automatenstahl. Der topfförmige Polkern verfügt über eine um die Längsachse X herum laufende, ringförmige Wandung 20a, welche in Richtung Zylinderkopfgehäuse 200 offen ist und plane Stirnflächen 23 aufweist, die orthogonal zu Längsachse X angeordnet sind. Auf der gegenüberliegenden Seite ragt dieser Polkern 20 mit seiner umlaufenden Wandung 20a aus dem Gehäusedeckel 30 heraus. Die umlaufende Wandung 20a ist dort von einer deckelseitigen Wandung 20b des Polkerns verschlossen. Darüber hinaus verfügt der Polkern 20 in seinem oberen Bereich über einen ringförmig von der Längsachse X wegspringenden Flansch 24, der unmittelbar unter dem Gehäusedeckel 13 sitzt und auf einer Schulter 12a der umlaufenden Wandung des Gehäuses 12 aufsitzt. Zwischen der umlaufenden Wandung des Gehäuses 12 und der umlaufenden Wandung 20a des Polkerns 20 ist eine Erregerspule 30 angeordnet. Diese Erregerspule 30 ist zweckmäßigerweise von Kunststoff umspritzt und in dem erwähnten Zwischenraum zwischen Gehäuse 12 und Polkern 20 gehalten. Wie insbesondere besonders deutlich die Figur 3 zeigt, ist zwischen dem Gehäuse 12 und dem Polkern eine geeignete Dichtung in Form von Dichtungsringen 80 platziert.

Im Inneren des topfförmigen Polkerns 20 ist zentrisch zur Mittenachse X ein Achsstößel 40 angeordnet, der vorzugsweise aus gehärtetem Metall, insbesondere dem Material 100Cr6, gebildet ist. Andere Materialien sind auc möglich, insbesondere auch Kunststoff, welcher vorzugsweise mit Glasfasern oder Ähnlichem verstärkt sein kann. Dieser Achsstößel 40 kann darüber hinaus magnetisch leitend sein, muss es jedoch nicht. Der Achsstößel 40 ist in einer Führungsbuchse 70, die ebenfalls vorzugsweise aus gehärtetem Stahl oder einem Hochleistungskunststoff besteht, geführt. Der Achsstößel 40 ragt sowohl oben als auch unten aus dieser Führungsbuchse 70 heraus. Der oben aus der Führungsbuchse 70 herausragende Abschnitt 40a des Achsstößels 40 verfügt über einen geringfügig kleineren Durchmesser als der Abschnitt 40b des Achsstößels 40, welcher innerhalb der Führungsbuchse 70 sitzt. Um diesen Abschnitt 40a ist eine Federeinrichtung 76, vorliegend eine Druckfeder, platziert, die sich einerseits an der Innenseite der deckenseitigen Wandung 20b des Polkerns 20 und andererseits an dem vorspringenden Flansch eines Federtellers 60 abstützt. Dieser Federteller 60 ist mit dem Achsstößel 40 feststehend verbunden, so dass die Federeinrichtung 46 den Achsstößel 40 nach unten drückt, so dass der Federteller 60 gegen die Führungsbuchse 70 schlägt. Da die Führungsbuchse 70 feststehend mit dem Polkern 20 in Verbindung steht, ist ein weiteres Auslenken des Achsstößels 40 nach unten nicht möglich.

In seinem unten aus der Führungsbuchse 70 herausstehenden Abschnitt 40e des Achsstößels 40 ist dieser Achsstößel 40 topfförmig aufgeweitet. Hierfür weist der Achsstößel 40 einen orthogonal zur Längsachse X verlaufenden Abschnitt 40e auf, der den Boden dieser topfförmigen Aufweitung bildet sowie eine wiederum parallel zur Längsachse X umlaufende Wandung 40f, welche an ihrem untersten Ende von einem nach außen springenden und ringförmig ausgebildetem Abschnitt 40g beendet ist.

An diesem unteren Abschnitt 40f des Achsstößels 40 ist eine ringförmige Ankerplatte 50 festgelegt, beispielsweise durch Verschweißung oder Verpressung. Dieser ringförmig und plattenförmig ausgestaltete Anker 50 verfügt über eine Vielzahl von Durchgangsbohrungen 52 und erstreckt sich orthogonal zur Längsachse X bis nahe an die umlaufende Wandung des Gehäuses 12. Der plattenförmige Anker 50 besteht dabei aus einem magnetischen Material, um einen optimalen magnetischen Fluss zu ermöglichen. Wie aus Figur 2 und Figur 3 ersichtlich ist, erstreckt sich oberhalb des plattenförmigen Ankers 50 ein flanschartig und ringförmig nach innen reichender Abschnitt 12b des Gehäuses 12 in Richtung Längsachse X. Der plattenförmige Anker 50 übergreift auch diesen Abschnitt 12a des Gehäuses 12. Der plattenförmige Anker 50 ist derart an dem Achsstößel 40 befestigt, dass sich im Ruhezustand dieses elektromagnetischen Aktors 10, also bei Nichtbestromung der Erregerspule 30, ein maximaler Abstand D von beispielsweise etwa 0,8 mm zwischen Oberseite des plattenförmigen Ankers 50 und der planen Stirnseite 22 der umlaufenden Wandung 20a des Polkerns 20 einstellt. Zweckmäßigerweise fluchtet die untere Fläche des Abschnittes 12b des Gehäuses 12 genau mit der planen Stirnfläche 22.

Die bodenseitige Wandung des Wandabschnittes 40e des Achsstößels 40 bildet eine Anschlagfläche 42 beziehungsweise Anlagefläche für das Ventilelement 220 von Figur 2. Im nichtbestromten Zustand des elektromagnetischen Aktors 10 ist diese Anlagefläche 42 so positioniert, dass das Ventilelement 220 in seine Offenstellung gedrückt ist, wie dies Figur 2 zeigt. Ein Kraftstofffluss von der Leitung 128 zur Leitung 132 und damit von der Niederdruckpumpe zur Hochdruckpumpe ist hierdurch sichergestellt.

Der elektromagnetische Aktor 10 ist hinsichtlich seiner Abmessungen so dimensioniert, dass bei Bestromung der Erregerspule 30 ein magnetischer Fluss erzeugt wird, der von der Wandung des Gehäuses 12 über den plattenförmigen Anker 50 und den Luftspalt D zum Polkern verläuft. Die hieraus resultierende Magnetkraft zieht den plattenförmigen Anker 50 nach oben, wodurch der Luftspalt D verringert wird. Dabei überwindet die Magnetkraft die von der Federeinrichtung 56 ausgeübte Federkraft, so dass der Achsstößel 40 samt plattenförmigem Anker 50 tatsächlich nach oben bewegt werden kann. Um zu vermeiden, dass der erwähnte Luftspalt D Null wird, also der Anker 50 an der planen Stirnfläche 22 des Polkerns 20 anschlägt und dort "magnetisch festklebt" ist die axiale Länge der Führungsbuchse 70 und der Abschnitt 40e des Stößels so aufeinander abgestimmt, dass der Abstand zwischen dem Abschnitt 40e des Achsstößels 40 zur unteren Wandung der Führungsbuchse 70 kleiner ist als der oben erwähnte maximal mögliche Spalt D. Der Abstand zwischen dem Abschnitt 40e des Achsstößels 40 und er unteren Wandung der Führungsbuchse 70 kann beispielsweise 0,6 mm betragen, so dass beim Bestromen der Erregerspule der Abschnitt 40e des Achsstößels 40 an der Führungsbuchse 70 anschlägt und ein minimaler Spalt D von etwa 0,2 mm zwischen dem plattenförmigen Anker 50 und der planen Stirnfläche 22 des Polkerns 20 verbleibt.

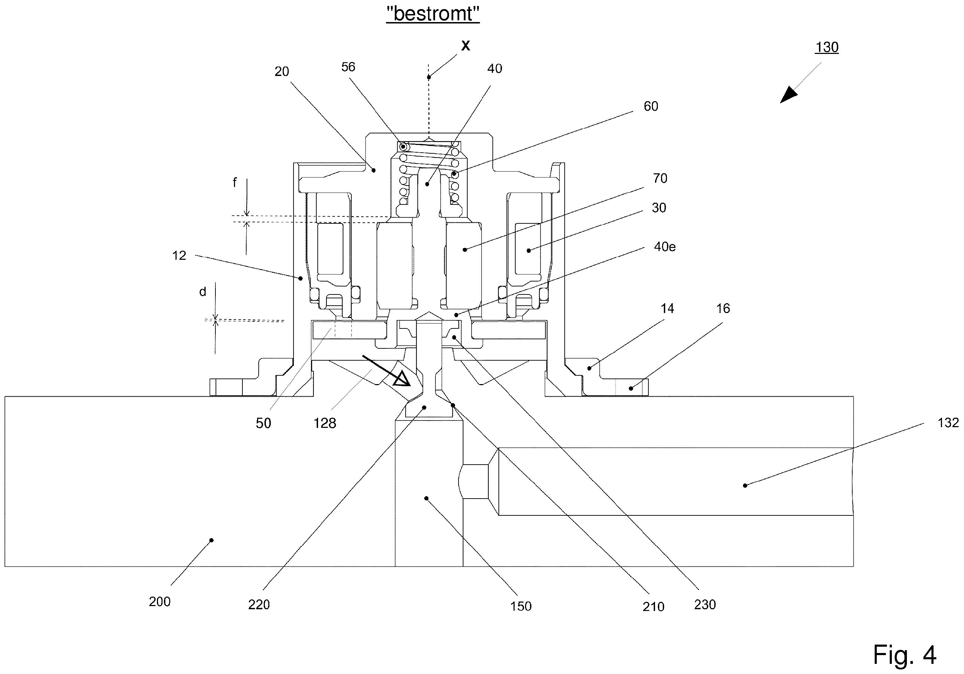

Den Zustand des elektromagnetischen Aktors 10 im bestromten Zustand der Erregerspule 30 zeigt Figur 4. Es ist dort deutlich zu erkennen, dass der Abschnitt 40e des Achsstößels 40 an der Führungsbuchse 70 unten anschlägt und ein minimaler Spalt d zwischen der unteren planen Stirnfläche 22 des Polkerns 20 und dem plattenförmigen Anker 50 verbleibt. Zugleich folgt das Ventilelement 220 aufgrund der das Ventilelement 220 nach oben drückenden Federeinrichtung 230 der Nach-Oben-Bewegung des Achsstößels 40 und der damit verbundenen Nach-Oben-Bewegung der Anlagefläche 42. Als Folge verschließt das Ventilelement 220 den Ventilsitz 210. Damit kann kein Kraftstoff mehr von der Leitung 128 zur Leitung 132 fließen. Als Folge kann der Kraftstoff in der Leitung 150 komprimiert werden.

Es ist hier anzumerken, dass das Öffnen und Schließen des Ventilsitzes 210 mit einer Frequenz im Bereich von etwa 100 Hz erfolgt. Es ist deshalb unerlässlich, dass eine ausreichend gute Führung mit wenig Reibungen und Widerständen im elektromagnetischen Aktor 10 sichergestellt ist. Hierfür verfügt der plattenförmige Anker 50 über die bereits erwähnten Durchgangsbohrungen 52, die zum Druckausgleich dienen. Auch die Führungsbuchse 70 verfügt über Durchgangsbohrungen 72, die zum Druckausgleich dienen. Schließlich verfügt auch der Achsstößel 40 in seinem Abschnitt 40b innerhalb der Führungsbuchse 70 über einen umlaufenden, verengenden Bereich 40d, um die Reibung zwischen Führungsbuchse 70 und Achsstößel 40 zu minimieren.

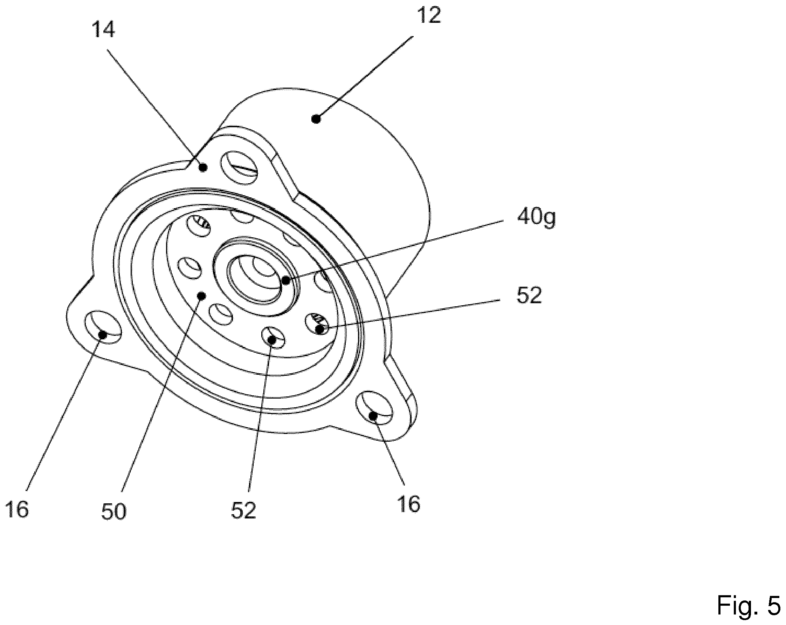

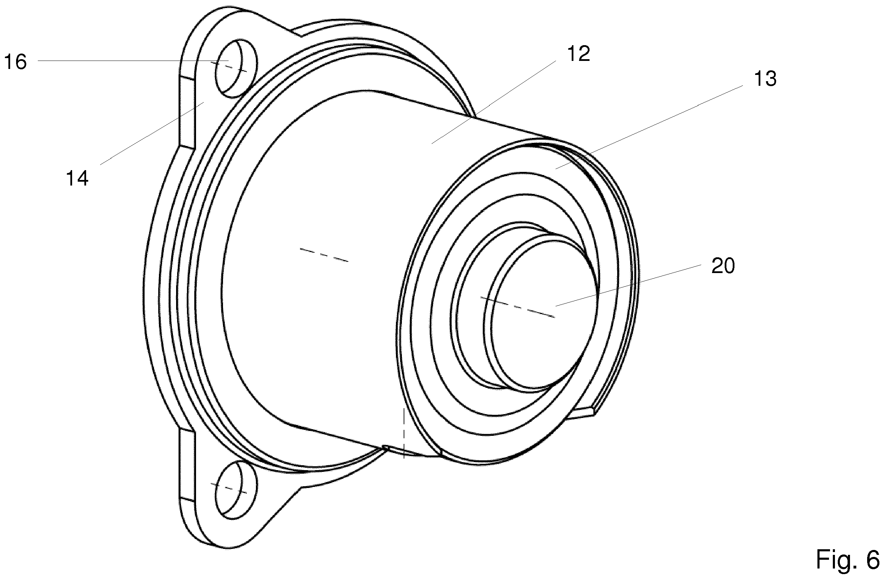

In Figur 5 und Figur 6 sind noch jeweils perspektivische Ansichten von schräg vorne und schräg hinten auf den elektromagnetischen Aktor 10 zu sehen. Figur 5 zeigt besonders deutlich den in Gestalt eines Ringes ausgebildeten, plattenförmigen Anker 50 mit der Vielzahl von Durchgangsbohrungen 52. Ebenfalls gut zu erkennen ist der vordere umlaufende Flansch 40g des Achsstößels 40. Zusätzlich gut zu erkennen ist der auf das Gehäuse 12 aufgeschobene ringförmige Befestigungsflansch 14 mit seinen Befestigungsöffnungen 16.

In Figur 6 ist der aus dem Gehäusedeckel 13 des Gehäuses 12 herausragende Polkern 20 zu erkennen.

Ein wesentlicher Vorteil des erfindungsgemäßen Aktors 10 ist es, dass der Hub des Ankers 50 durch den Montageprozess einstellbar ist. Hierbei wird der auf den vorzugsweise gehärteten Achsstößel 40 aufgepresste Anker 50 in die Führungsbuchse 70 gesteckt. Mittels einem gabelförmigen Distanzstück zwischen Führungsbuchse 70 und Federteller 60 kann bei der Montage ein definiertes Axialspiel eingestellt werden. Es ergeben sich beim Einbau zwei Endanschläge, einmal stirnseitig auf dem Achstößel 40 und der Führungsbuchse 70 sowie zwischen dem Federteller 60 und der Führungsbuchse 70.

### Bezugszeichenliste

- 10: elektromagnetische Aktor
- 12: Gehäuse
- 12a: Flanschvorsprung des Gehäuses
- 12b: ringförmiger Abschnitt
- 13: Gehäusedeckel
- 14: Flansch
- 16: Bohrung
- 20: Polkern
- 20a: Ringförmige Wandung
- 20b: Deckenseitige Wandung
- 22: plane Stirnflächen
- 24: Flansch
- 30: Erregerspule
- 40: Ankerstößel
- 40a: Abschnitt des Achsstößels
- 40b: Abschnitt des Achsstößels
- 40c: Abschnitt des Achsstößels
- 40d: Abschnitt des Achsstößels
- 40e: Abschnitt des Achsstößels
- 40f: Abschnitt des Achsstößels
- 40g: Abschnitt des Achsstößels
- 42: Anlagefläche
- 50: Ankerplatte
- 52: Durchgangsbohrungen
- 56: Federeinrichtung
- 60: Federteller
- 70: Buchse
- 72: Druckausgleichsbohrungen
- 80: Dichtringe
- 100: Kraftstoffkreislaufsystem
- 102: Common-Rail, Hochdruckleitung
- 104: Injektoren
- 106: Motorblock
- 110: Drucksensor
- 112: Überdruckventil
- 120: Tank
- 122: Leitung
- 124: Niederdruckpumpe mit Bypass
- 124a: Ventil
- 128: Leitung
- 130: Ventileinrichtung
- 132: Leitung
- 134: Hochdruckpumpe
- 140: Zuleitung von 102
- 150: Ableitung von 102
- 152: Leitung
- 200: Ventilelement, Zylinderkopfgehäuse
- 210: Ventilsitz
- 220: Ventilkörper
- 230: Federeinrichtung
- 232: Anlagefläche
- X: Mittenachse
- D: Luftspalt groß
- d: Luftspalt klein

## Patentansprüche

1. Elektromagnetischer Aktor (10) einer Ventileinrichtung (130), insbesondere in einem Common-Rail-System eines Kraftfahrzeuges, mit einem innerhalb eines Gehäuses (12) angeordneten und bei Bestromung einer Erregerspule (30) axial entlang einer Längsachse (X) des Aktors (10) bewegbaren Anker (50) zum Betätigen eines in einem Kanal befindlichen Ventilelementes (220), sowie mit einem topfförmigen Polkern 20 aus magnetisch leitendem Material, der im Inneren des Gehäuses (12) rotationssymmetrisch zur Längsachse (X) angeordnet ist, wobei der elektromagnetische Aktor (10) nach Art eines elektromagnetischen Haftsystems ausgebildet ist mit einem plattenförmigen Anker (50), welcher plane und orthogonal zur Längsachse (X) angeordnete Stirnflächen (22) des topfförmigen Polkerns (20) vollständig übergreift, wobei der plattenförmige Anker (50) mit einem Achsstößel (40) feststehend verbunden ist, der im Inneren des topfförmigen Polkerns (20) zentrisch zur Längsachse (X) in einer Führungsbuchse (70) geführt angeordnet ist, wobei ein unten aus der Führungsbuchse (70) herausstehender Abschnitt (40e) des Achsstößels (40) topfförmig aufgeweitet ist, wobei der Achsstößel (40) einen orthogonal zur Längsachse (X) verlaufenden Abschnitt (40e) aufweist, der den Boden dieser topfförmigen Aufweitung bildet sowie eine wiederum parallel zur Längsachse (X) umlaufende Wandung (40f) aufweist, welche an ihrem untersten Ende von einem nach außen springenden und ringförmig ausgebildetem Flansch (40g) beendet ist, wobei der plattenförmige Anker (50) an der umlaufenden Außenwandung des Ankerstößels (40) und/oder dem Flansch (40g) festgelegt ist, und
wobei eine bodenseitige Wandung eines Wandabschnitts (40e) eine Anschlagsfläche (42) bzw. Anlagefläche für das Ventilelement (220) bildet.

2. Elektromagnetischer Aktor (10) nach Anspruch 1,
**dadurch gekennzeichnet, dass** der Ankerstößel (40) mit seinem mittleren Bereich (40b) in einer Führungsbuchse (70) geführt ist.

3. Elektromagnetischer Aktor nach Anspruch 2,
**dadurch gekennzeichnet, dass** die Führungsbuchse (70) Ausgleichsöffnungen (78) aufweist.

4. Elektromagnetischer Aktor (10) nach Anspruch 2 oder 3,
**dadurch gekennzeichnet, dass** der Achsstößel (40) im Bereich der Führungsbuchse (70) einen Abschnitt (40c) verringernden Durchmessers aufweist.

5. Elektromagnetischer Aktor (10) nach einem der Ansprüche 1 bis 4,
**dadurch gekennzeichnet, dass** der plattenförmige Anker (50) Durchgangsbohrungen (52) aufweist.

6. Elektromagnetischer Aktor (10) nach einem der Ansprüche 1 bis 5,
**dadurch gekennzeichnet, dass** der Polkern (20) topfförmig gestaltet ist und im Bereich seines den planen Stirnflächen (22) gegenüberliegendes Endes einen flanschartigen Vorsprung (24) aufweist, welcher bis zum Gehäuse (12) des elektromagnetischen Aktors (10) heranreicht.

7. Elektromagnetischer Aktor (10) nach einem der Ansprüche 1 bis 6,
**dadurch gekennzeichnet, dass** der plattenförmige Anker (50) gegen eine Federeinrichtung (50) derart vorgespannt ist, dass im nicht bestromten Zustand der Erregerspule (30) des elektromagnetischen Aktors (10) ein Luftspalt (D) im Bereich ein maximaler Abstand von 0,8 mm zwischen plattenförmigem Anker (50) und planer Stirnfläche (22) des Polkerns (20) vorhanden ist, während sich bei Bestromung der Erregerspule (30) der Luftspalt (D) auf einen Wert im Bereich von etwa 0,2 mm einnimmt.

8. Elektromagnetischer Aktor (10) nach einem der Ansprüche 1 bis 7,
**dadurch gekennzeichnet, dass** das Gehäuse (12) einen Gehäusedeckel (13) aufweist, welcher durch Umbördelung an einer umlaufenden Gehäusewandung des Gehäuses (12) festgelegt ist.

9. Elektromagnetischer Aktor (10) nach einem der Ansprüche 1 bis 7,
**dadurch gekennzeichnet, dass** dieser auf ein Zylinderkopfgehäuse (200) einer Hochdruckpumpe (134) eines Kraftfahrzeugs aufgeschraubt ist.

10. Verwendung eines elektromagnetischen Aktors (10) nach einem der Ansprüche 1 bis 9 in einem Common-Rail-System als Schaltventil in einer Kraftstoffleitung zwischen einer Hochdruckpumpe (134) und einer Niederdruckpumpe (124).

## Claims

1. Electromagnetic actuator (10) of a valve device (130), in particular in a common rail system of a motor vehicle, having an armature (50) which is arranged within a housing (12) and, in the case of energization of an exciter coil (30), can be moved axially along a longitudinal axis (X) of the actuator (10) for the actuation of a valve element (220) which is situated in a channel, and having a pot-shaped pole core 20 which is made from magnetically conducting material and is arranged in the interior of the housing (12) in a rotationally symmetrical manner with respect to the longitudinal axis (X), the electromagnetic actuator (10) being configured in the manner of an electromagnetic holding system with a plate-shaped armature (50) which engages completely over end faces (22) of the pot-shaped pole core (20) which are planar and are arranged orthogonally with respect to the longitudinal axis (X), the plate-shaped armature (50) being connected fixedly to an axial plunger (40) which is arranged in the interior of the pot-shaped pole core (20) in a manner which is guided in a guide bush (70) centrally with respect to the longitudinal axis (X), a section (40e) of the axial plunger (40), which section (40e) protrudes out of the guide bush (70) at the bottom, being widened in a pot-shaped manner, the axial plunger (40) having a section (40e) which runs orthogonally with respect to the longitudinal axis (X), forms the bottom of the said pot-shaped widened portion, and has a wall (40f) which in turn runs around parallel to the longitudinal axis (X) and, at its lowermost end, is closed by way of an outwardly projecting and annularly configured flange (40g), the plate-shaped armature (50) being fixed on the circumferential outer wall of the armature plunger (40) and/or the flange (40g), and a bottom-side wall of a wall section (40e) forming a stop face (42) or bearing face for the valve element (220).

2. Electromagnetic actuator (10) according to Claim 1, **characterized in that** the armature plunger (40) is guided by way of its middle region (40b) in a guide bush (70).

3. Electromagnetic actuator according to Claim 2, **characterized in that** the guide bush (70) has equalization openings (78).

4. Electromagnetic actuator (10) according to Claim 2 or 3, **characterized in that** the axial plunger (40) has a section (40c) of reduced diameter in the region of the guide bush (70).

5. Electromagnetic actuator (10) according to one of Claims 1 to 4, **characterized in that** the plate-shaped armature (50) has through bores (52).

6. Electromagnetic actuator (10) according to one of Claims 1 to 5, **characterized in that** the pole core (20) is of pot-shaped design, and has a flange-like projection (24) in the region of its end which lies opposite the planar end faces (22), which projection (24) reaches as far as the housing (12) of the electromagnetic actuator (10) .

7. Electromagnetic actuator (10) according to one of Claims 1 to 6, **characterized in that** the plate-shaped armature (50) is prestressed against a spring device (50) in such a way that, in the non-energized state of the exciter coil (30) of the electromagnetic actuator (10), there is an air gap (D) in the range a maximum spacing of 0.8 mm between the plate-shaped armature (50) and the planar end face (22) of the pole core (20), whereas, in the case of energization of the exciter coil (30), the air gap (D) assumes a value in the range of approximately 0.2 mm.

8. Electromagnetic actuator (10) according to one of Claims 1 to 7, **characterized in that** the housing (12) has a housing cover (13) which is fixed by way of beading on a circumferential housing wall of the housing (12).

9. Electromagnetic actuator (10) according to one of Claims 1 to 7, **characterized in that** it is screwed onto a cylinder head housing (200) of a high pressure pump (134) of a motor vehicle.

10. Use of an electromagnetic actuator (10) according to one of Claims 1 to 9 in a common rail system as a switching valve in a fuel line between a high pressure pump (134) and a low pressure pump (124).

## Revendications

1. Actionneur électromagnétique (10) d'un dispositif de soupape (130), en particulier dans un système à rampe commune d'un véhicule automobile, comprenant un induit (50) monté à la partie interne d'un boîtier (12), et mobile axialement lors de l'alimentation en courant d'une bobine d'excitation (30) le long de l'axe longitudinal (X) de l'actionneur (10), pour permettre d'actionner un élément de soupape (220) situé dans un canal, ainsi qu'un noyau polaire en forme de pot (20) en un matériau magnétiquement conducteur qui est monté à la partie interne du boîtier (12) et est symétrique en rotation par rapport à l'axe longitudinal (X), l'actionneur électromagnétique (10) étant réalisé sous la forme d'un système d'adhérence électromagnétique, comprenant un induit en forme de plaque (50) qui s'applique totalement sur des surfaces frontales (22) planes et perpendiculaires à l'axe longitudinal (X) du noyau polaire en forme de pot (20), l'induit en forme de plaque (50) étant relié solidairement à un poussoir axial (40) qui est guidé à la partie interne du noyau polaire en forme de pot (20) concentriquement à l'axe longitudinal (X) dans un manchon de guidage (70), un segment (40e) du poussoir axial (40) faisant saillie au-dessous du manchon de guidage (70) s'élargissant en forme de peau, le poussoir axial (40) comprenant un segment (40e) s'étendant perpendiculairement à l'axe longitudinal (X), qui forme le fond de cet élargissement en forme de pot ainsi qu'une paroi périphérique (40f) s'étendant parallèlement à l'axe longitudinal (X) qui se termine au niveau de son extrémité inférieure par une bride annulaire (40g) s'étendant vers l'extérieur,
l'induit en forme de plaque (50) étant fixé à la paroi périphérique externe du poussoir d'induit (40) et/ou à la bride (40g), et
la paroi située du côté du fond du segment de paroi (40e) formant une surface de butée (42) ou une surface d'appui pour l'élément de soupape (220).

2. Actionneur électromagnétique (10) conforme à la revendication 1,
**caractérisé en ce que**
le poussoir d'induit (40) est guidé par sa zone médiane (40b) dans un manchon de guidage (70).

3. Actionneur électromagnétique conforme à la revendication 2,
**caractérisé en ce que**
le manchon de guidage (70) comporte des ouvertures d'équilibrage (78).

4. Actionneur électromagnétique (10) conforme à la revendication 2 ou 3,
**caractérisé en ce que**
le poussoir axial (40) comporte dans la zone du manchon de guidage (70) un segment (40c) ayant un diamètre diminué.

5. Actionneur électromagnétique (10) conforme à l'une des revendications 1 à 4,
**caractérisé en ce que**
l'induit en forme de plaque (50) comporte des perçages traversants (52) .

6. Actionneur électromagnétique (10) conforme à l'une des revendications 1 à 5,
**caractérisé en ce que**
le noyau polaire (20) est réalisé en forme de pot et comporte dans la zone de son extrémité opposée aux surfaces frontales planes (22) une saillie en forme de bride (24) qui s'étend jusqu'au boîtier (12) de l'actionneur électromagnétique (10) .

7. Actionneur électromagnétique (10) conforme à l'une des revendications 1 à 6,
**caractérisé en ce que**
l'induit en forme de plaque (50) est précontraint contre un dispositif de ressort (50) de sorte que, lorsque la bobine d'excitation (30) de l'actionneur électromagnétique (10) n'est pas alimentée en courant, il y ait un intervalle d'air (D) de l'ordre d'au maximum 0,8 mm entre l'induit en forme de plaque (50) et les surfaces frontales (22) du noyau polaire (20) alors que lorsque la bobine d'excitation (30) est alimentée en courant l'intervalle d'air (D) prend une valeur d'environ 0,2 mm.

8. Actionneur électromagnétique (10) conforme à l'une des revendications 1 à 7,
**caractérisé en ce que**
le boîtier (12) comporte un couvercle (13) qui est fixé par un bord rabattu sur la paroi périphérique du boîtier (12).

9. Actionneur électromagnétique (10) conforme à l'une des revendications 1 à 7,
**caractérisé en ce qu'**
il est vissé sur un carter de culasse (200) d'une pompe haute pression (134) d'un véhicule.

10. Utilisation d'un actionneur électromagnétique (10) conforme à l'une des revendications 1 à 9,
dans un système à rampe commune en tant que soupape de commutation dans une conduite de carburant entre une pompe haute pression (134) et une pompe basse pression (124).
